(19) Europäisches Patentamt / European Patent Office / Office européen des brevets

(11) **EP 3 055 453 B1**

(12) **EUROPÄISCHE PATENTSCHRIFT**

(45) Veröffentlichungstag und Bekanntmachung des Hinweises auf die Patenterteilung:
**22.11.2023   Patentblatt 2023/47**

(21) Anmeldenummer: **14777094.5**

(22) Anmeldetag: **29.09.2014**

(51) Internationale Patentklassifikation (IPC):
*D21B 1/00* (2006.01)     *B27N 3/00* (2006.01)
*C08J 9/00* (2006.01)     *C08L 97/00* (2006.01)

(52) Gemeinsame Patentklassifikation (CPC):
(C-Sets verfügbar)
**C08L 97/02; C08G 18/6492; C08L 1/02;
D21B 1/00;** B27N 3/005; B27N 3/02;
C08G 18/7664; C08L 2205/16          (Forts.)

(86) Internationale Anmeldenummer:
**PCT/EP2014/070785**

(87) Internationale Veröffentlichungsnummer:
**WO 2015/052028 (16.04.2015 Gazette 2015/15)**

(54) **LIGNOCELLULOSEWERKSTOFFE ENTHALTEND DEFIBRILLIERTE CELLULOSE**

LIGNOCELLULOSIC MATERIALS CONTAINING DEFIBRILLATED CELLULOSE

MATÉRIAUX À BASE DE LIGNOCELLULOSE CONTENANT DE LA CELLULOSE DÉFIBRILLÉE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **10.10.2013   EP 13188006**

(43) Veröffentlichungstag der Anmeldung:
**17.08.2016   Patentblatt 2016/33**

(73) Patentinhaber: **BASF SE
67056 Ludwigshafen am Rhein (DE)**

(72) Erfinder:
• **SCHADE, Matthias
67117 Limburgerhof (DE)**
• **WEINKÖTZ, Stephan
67434 Neustadt (DE)**
• **ASSMANN, Jens
67435 Neustadt (DE)**

(74) Vertreter: **BASF IP Association
BASF SE
G-FLP-C006
67056 Ludwigshafen (DE)**

(56) Entgegenhaltungen:
**WO-A1-2013/092817     WO-A2-2010/131016**

(52) Gemeinsame Patentklassifikation (CPC): (Forts.)

C-Sets
**C08L 1/02, C08L 61/06, C08L 97/02;**
**C08L 1/02, C08L 97/02;**
**C08L 97/02, C08L 1/02;**
**C08L 97/02, C08L 1/02, C08L 61/06**

C-Sets

**Beschreibung**

Die vorliegende Erfindung betrifft Lignocellulosewerkstoffe, die ein- oder mehrere lignocelulosehaltige Stoffe, mikrofibrillierte Cellulose und Bindemittel, gegebenenfalls expandierte bzw. expandierbare Kunststoffteilchen und ge gebenenfalls Additive enthalten sowie Verfahren zu deren Herstellung.

Aus der DE19947856A1 sind Holzfaserplatten, ins besondere MDF Platten, bekannt, bei denen Holzfasern teilweise durch Cellulosefasern aus Altpapier ersetzt wurden. Dabei wurden Beimischungen von Altpapier-Cellulosefasern zu Holzfasern von bis zu 90 % getestet. Über die mechanischen Eigenschaften der Platten wird allerdings nichts berichtet.

Aus Holz als Roh- und Werkstoff 1970, 28, 3, Seite 101 bis 104 sind Spanplatten mit Beimischung von Altpapierstreifen bekannt. Dabei wurde Altpapier in einem Aktenvernichter zerkleinert, 1:1 mit Holzspänen vermischt, beleimt und zu Spanplatten verpresst. Dabei treten Schwierigkeiten bei der Mischung des Papiers mit den Holzspänen auf und die mechanischen Eigenschaften lassen zu wünschen übrig.

WO2013/092817 A1 offenbart Lignocellulosewerkstoffe, die

A) 30 bis 98,99 Gew.-% ein- oder mehrere lignocellulosehaltige Stoffe,
B) 1 bis 50 Gew.-% eines Bindemittels, ausgewählt aus der Gruppe bestehend aus Aminoplastharz, Phenolformaldehydharz, organischem Isocyanat mit mindestens zwei Isocyanatgruppen oder deren Gemischen, gegebenenfalls mit einem Härter, und
C) 0 bis 25 Gew.-% expandierte Kunststoffteilchen mit der Schüttdichte im Bereich von 10 bis 150 kg/m$^3$ und
D) 0 bis 68 Gew.-% Additive

enthalten.

WO2010/131016 offenbart ein Verfahren zur Herstellung einer wässrigen Suspension für die Herstellung von Papierprodukten oder Papierbeschchtungen, die mikrofibrillierte Cellulose und anorganisches partikelförmiges Material umfasst.

Der vorliegenden Erfindung lag daher die Aufgabe zugrunde, den zuvor genannten Nachteilen abzuhelfen, insbesondere Lignocellulosewerkstoffe mit verbesserten mechanischen Eigenschaften zu herzustellen.

Demgemäß wurden neue und verbesserte Lignocellulosewerkstoffe, die

A) 30 bis 98,99 Gew.-% ein- oder mehrere lignocellulosehaltige Stoffe,
B) 0,01 bis 50 Gew.-% mikrofibrillierte Cellulose,
C) 1 bis 50 Gew.-% eines Bindemittels, ausgewählt aus der Gruppe bestehend aus Aminoplastharz, Phenolformaldehydharz, organischem Isocyanat mit mindestens zwei Isocyanatgruppen oder deren Gemischen, gegebenenfalls mit einem Härter,
D) 0 bis 25 Gew.-% expandierte Kunststoffteilchen mit der Schüttdichte im Bereich von 10 bis 150 kg/m$^3$ und
E) 0 bis 68 Gew.-% Additive
enthalten, wobei die lignocellulosehaltigen Stoffe holzfaserhaltige Pflanzen, Holz oder deren Gemische sind,

gefunden.

Des Weiteren wurde ein neues und verbessertes Verfahren zur Herstellung von Lignocellulosewerkstoffen gefunden, welches dadurch gekennzeichnet ist, dass man

A) 30 bis 98,99 Gew.-% ein- oder mehrere lignocellulosehaltige Stoffe,
B) 0,01 bis 50 Gew.-% mikrofibrillierte Cellulose,
C) 1 bis 50 Gew.-% eines Bindemittels, ausgewählt aus der Gruppe bestehend aus Aminoplastharz, Phenolformaldehydharz, organischem Isocyanat mit mindestens zwei Isocyanatgruppen oder deren Gemischen, gegebenenfalls mit einem Härter,
D) 0 bis 25 Gew.-% expandierte Kunststoffteilchen mit der Schüttdichte im Bereich von 10 bis 150 kg/m$^3$ und
E) 0 bis 68 Gew.-% Additive

mischt und anschließend unter erhöhter Temperatur und unter erhöhtem Druck verpresst, wobei die lignocellulosehaltigen Stoffe holzfaserhaltige Pflanzen, Holz oder deren Gemische sind.

Die Summe der Komponenten A), B), C) und gegebenenfalls D) und E) addiert sich zu 100 %.

Der Begriff Lignocellulosewerkstoff bedeutet ein- oder mehrschichtige, also ein bis fünfschichtige, bevorzugt ein- bis dreischichtige, besonders bevorzugt ein- oder dreischichtige Lignocellulosewerkstoffe. Als Lignocellulosewerkstoffe werden in diesem Zusammenhang gegebenenfalls furnierte Span-, OSB- oder Faserwerkstoffe, insbesondere Holzfaserwerkstoffe wie LDF-, MDF- und HDF-Werkstoffe, bevorzugt Span- oder Faserwerkstoffe, besonders bevorzugt Spanwerkstoffe verstanden. Werkstoffe sind u.a. Platten, Fliesen, Formteile, Halbzeuge oder Komposite, bevorzugt Platten, Fliesen, Formteile oder Komposite, besonders bevorzugt Platten.

Komponente A

Lignocellulosehaltige Stoffe sind Stoffe, die Lignocellulose enthalten. Der Gehalt an Lignocellulose kann in weiten Bereichen variiert werden und beträgt in der Regel 20 bis 100 Gew.-%, bevorzugt 50 bis 100 Gew.-%, besonders bevorzugt 85 bis 100 Gew.-%, insbesondere 100 Gew.-% Lignocellulose. Der Begriff Lignocellulose ist dem Fachmann bekannt.

Als ein- oder mehrere lignocellulosehaltige Stoffe eignen sich beispielsweise Stroh, holzfaserhaltige Pflanzen, Holz oder deren Gemische. Unter mehreren lignocellulosehaltigen Stoffen werden in der Regel 2 bis 10, bevorzugt 2 bis 5, besonders bevorzugt 2 bis 4, insbesondere 2 oder 3 unterschiedliche lignocellulosehaltige Stoffe verstanden.

Als Holz eignen sich Holzfasern oder Holzpartikel wie Holzlagen, Holzstreifen, Holzspäne, Holzstaub oder deren Gemische, bevorzugt Holzspäne, Holzfasern, Holzstaub oder deren Gemische, besonders bevorzugt Holzspäne, Holzfasern oder deren Gemische. Als holzfaserhaltige Pflanzen eigenen sich beispielsweise Flachs, Hanf oder deren Gemische.

Ausgangsmaterialien für Holzpartikel oder Holzfasern sind in der Regel Durchforstungshölzer, Industrieresthölzer und Gebrauchthölzer sowie holzfaserhaltige Pflanzen bzw. Pflanzenteile.

Für die Herstellung der Holzpartikel oder Holzfasern kommt jede beliebige Holzart wie Weich- oder Hartholz von Laub- oder Nadelhölzer, u.a. aus Industrierestholz oder Plantagenholz in Frage, bevorzugt Eukalyptus-, Fichten-, Buchen-, Kiefern-, Lärchen-, Linden-, Pappel-, Eschen-, Kastanien-, Tannenholz oder deren Gemische, besonders bevorzugt Eukalyptus-, Fichten-, Buchenholz oder deren Gemische, insbesondere Eukalyptus-, Fichtenholz oder deren Gemische.

Die lignocellulosehaltigen Stoffe werden erfindungsgemäß in der Regel zerkleinert und als Partikel oder Fasern eingesetzt.

Als Partikel eignen sich Sägespäne, Holzspäne, Hobelspäne, Holzpartikel, gegebenenfalls zerkleinertes Getreidestroh, Schäben, Baumwollstängel oder deren Gemische, bevorzugt Sägespäne, Hobelspäne, Holzspäne, Holzpartikel, Schäben oder deren Gemische, besonders bevorzugt Sägespäne, Hobelspäne, Holzspäne, Holzpartikel oder deren Gemische.

Die Dimensionen der zerkleinerten lignocellulosehaltigen Stoffe sind nicht kritisch und richten sich nach dem herzustellenden Lignocellulosewerkstoff.

Große Späne, die zum Beispiel für die Herstellung von OSB-Platten verwendet werden heißen auch Strands. Die mittlere Größe der Partikel zur Herstellung von OSB-Platten, Strands, beträgt in der Regel 20 bis 300 mm, bevorzugt 25 bis 200 mm, besonders bevorzugt 30 bis 150 mm.

Für die Herstellung von Spanplatten werden in der Regel kleiner Späne verwendet. Die dafür benötigten Partikel können mittels Siebanalyse der Größe nach klassifiziert werden. Die Siebanalyse wird zum Beispiel in der DIN 4188 oder der DIN ISO 3310 beschrieben. Die mittlere Größe der Partikel beträgt in der Regel 0,01 bis 30 mm, bevorzugt 0,05 bis 25 mm, besonders bevorzugt 0,1 bis 20 mm.

Als Fasern eignen sich Holzfasern, Cellulosefasern, Hanffasern, Baumwollfasern, Bambusfasern, Miscanthus, Bagasse oder deren Gemische, bevorzugt Holzfasern, Hanffasern, Bambusfasern, Miscanthus, Bagasse (Zuckerrohr) oder deren Gemische, besonders bevorzugt Holzfasern, Bambusfasern oder deren Gemische. Mittels Die Länge der Fasern beträgt in der Regel 0,01 bis 20 mm, bevorzugt 0,05 bis 15 mm, besonders bevorzugt 0,1 bis 10 mm.

Die Partikel oder Fasern liegen in der Regel auch sortenrein, d.h. wenn nur eine der zuvor genannten Sorten (z.B. Späne, Holzspäne bzw. Holzfasern) eingesetzt werden, als Gemische vor, deren einzelne Teile, Partikel oder Fasern sich in Größe und Gestalt unterscheiden.

Die Aufbereitung zu den gewünschten lignocellulosehaltigen Stoffen kann nach an sich bekannten Verfahren erfolgen (siehe zum Beispiel: M. Dunky, P. Niemz, Holzwerkstoffe und Leime, Seite 91 bis 156, Springer Verlag Heidelberg, 2002).

Die lignocellulosehaltigen Stoffe können nach üblichen, dem Fachmann bekannten Methoden der Trocknung mit den danach üblichen geringen Mengen Wasser (in einer üblichen geringen Schwankungsbreite; sog. "Restfeuchte") erhalten werden; dieses Wasser ist bei den Gewichtsangaben der vorliegenden Erfindung nicht berücksichtigt.

Die mittlere Dichte der erfindungsgemäßen lignocellulosehaltige Stoffe ist beliebig und lediglich vom eingesetzten lignocellulosehaltigen Stoff abhängig und liegt in der Regel bei 0,2 bis 0,9 $g/cm^3$, bevorzugt bei 0,4 bis 0,85 $g/cm^3$, besonders bevorzugt bei 0,4 bis 0,75 $g/cm^3$, insbesondere bei 0,4 bis 0,6 $g/cm^3$.

Bei einer mittleren Dichte im Bereich von 601 bis 1200 $kg/m^3$, bevorzugt 601 bis 850 $kg/m^3$, besonders bevorzugt 601 bis 800 $kg/m^3$, werden diese als höherdichte, bei einer mittleren Dichte im Bereich von 200 bis 600 $kg/m^3$, bevorzugt 300 bis 600 $kg/m^3$, besonders bevorzugt 350 bis 600 $kg/m^3$ als niedrigdichte lignocellulosehaltige Stoffe bezeichnet. Bei Faserplatten unterscheidet man zwischen hochdichten Faserplatten (HDF) mit einer Dichte $\geq$800 $kg/m^3$, mitteldichten

Faserplatten (MDF) mit einer Dichte zwischen 650 und 800 kg/m$^3$ und leichten Faserplatten (LDF) mit einer Dichte $\leq$ 650 kg/m$^3$.

Komponente B

Als Komponente B) eignet sich mikrofibrillierte Cellulose, die auch als Mikrocellulose, (Cellulose) Mikrofibrillen, nanofibrillierte Cellulose, Nanocellulose oder (Cellulose) Nanofibrillen bezeichnet wird (Cellulose 2010, 17, 459; Seite 460, rechte Spalte).

Unter mikrofibrillierter Cellulose versteht man eine Cellulose, die defibrilliert wurde. Das bedeutet, dass die einzelnen Mikrofibrillen der cellulosehaltigen Fasern teilweise oder komplett voneinander getrennt wurden. Die mikrofibrillierte Cellulose hat eine mittlere Faserlänge von 0,1 bis 1500 $\mu$m, bevorzugt von 1 bis 1500 $\mu$m, besonders bevorzugt von 500 bis 1300 $\mu$m und mindestens 15 Gew.-% der Fasern sind kürzer als 200 $\mu$m.

Die mikrofibrillierten Cellulosen weisen in der Regel eine BET-Oberfläche von 10 bis 500 m$^2$/g, bevorzugt 20 bis 100 m$^2$/g, besonders bevorzugt 30 bis 75 m$^2$/g auf.

Die mikrofibrillierten Cellulosen weisen in der Regel eine Entwässerungsfähigkeit von $\geq$60 SR, bevorzugt von $\geq$75 SR, besonders bevorzugt von $\geq$80 SR auf.

Die mittlere Faserlänge ist das Gewichtsmittel der Faserlängen (L$_W$) bestimmt nach der Tappi Norm T271 (Lit.: Tappi Journal, 45 (1962), No. 1, Seiten 38 bis 45. Der Anteil an Fasern, die eine bestimmte Länge nicht überschreiten werden ebenfalls nach der Tappi Norm T271 bestimmt.

Die BET-Oberfläche der mikrofibrillierten Cellulose kann nach folgender Methode bestimmt werden:
Eine wässrige Formulierung der mikrofibrillieren Cellulose (Suspension, Gel) wird auf einer Fritte platziert und mit tert.-Butanol gewaschen. Die erhaltene tert.-Butanol Suspension der mikrofibrillierten Cellulose wird von der Fritte auf eine gekühlte Metallplatte (ca. 0°C) mit Glasdeckel (Lyophilisator, Gefriertrockner) aufgebracht. Die Probe wird im unter Kühlung über Nacht getrocknet. Tert.-Butanol sublimiert langsam und hinterlässt die strukturierte mikrofibrillierte Cellulose gefriergetrocknet. Bei der erhaltenen, schwammartigen, festen mikrofibrillierten Cellulose wird durch Physisorption von Stickstoff (Messung in einem Oberflächen BET Messgerät (Micromeritics ASAP2420); die Stickstoffbeladung wird gegen den Stickstoff Partialdruck aufgetragen und mit der BET Theorie ausgewertet) die Oberfläche ermittelt.

Die SR - Werte werden nach der Schopper-Riegler Methode wie in der ISO 5267-1 bestimmt.

Cellulose ist an sich bekannt und/oder lässt sich nach an sich bekannten Verfahren herstellen.

Mikrofibrillierte Cellulose lässt sich aus handelsüblicher Cellulose oder aus Cellulosen für die Papierindustrie herstellen.

Mikrofibrillierte Cellulose kann auf mehrere Weisen hergestellt werden:

a) Extrudieren von Cellulosefasern in einem Doppelschneckenextruder wie in WO-A-2010/149711 oder WO-A-2011/055148 beschrieben,
b) Extrudieren von Cellulosefasern gemeinsam mit Prozeß- bzw. Modifikationschemikalien wie in WO-A-2011/051882 beschrieben,
c) Homogenisieren einer Suspension aus Cellulosefasern indem man diese Suspension unter hohem Druck durch eine Düse presst wie in EP-A-51230 oder EP-A-402866, Beispiel 1, beschrieben,
d) Zermahlen cellulosehaltiger Fasern, u.a. in einem Refiner wie in US-B-6,379,594 beschrieben,
e) Allgemeine mechanische Zerkleinerung wie in EP-A-726356 beschrieben.

Bevorzugt wird die mikrofibrillierte Cellulose nach Methode a), b), d), e), besonder bevorzugt nach Methode a), b), d), insbesondere nach Methode a), b) hergestellt.

Als Cellulose eignen sich neue als auch wiederaufbereitete Cellulosen oder deren Gemische, insbesondere neue als auch wiederaufbereitete Cellulosefasern oder deren Gemische. Es kommen sämtliche dafür gängigen Typen, z.B. Cellulosefasern aus Holzstoff und allen ein- und mehrjährigen Pflanzen gewonnenen Fasern, in Betracht. Zu Holzstoff gehören beispielsweise Schliff, wie Holzschliff oder Druckschliff, thermomechanischer Holzstoff (thermomechanical pulp = TMP), chemo-thermomechanischer Holzstoff (chemithermomechanical pulp = CTMP), Halbzellstoff, Hochausbeutezellstoff und Refiner Mechanical Pulp (RMP), sowie Altpapier; alle aus mechanischer Herstellung. Außerdem eignen sich Zellstoffe, die in gebleichter oder ungebleichter Form verwendet werden können. Beispiele hierfür sind Sulfat-, Sulfit-, Soda- und Natronzellstoff; alle aus chemischer Herstellung. Unter den Zellstoffen verwendet man vorzugsweise gebleichte Zellstoffe, die auch als gebleichter Kraftzellstoff bezeichnet werden. Die genannten Stoffe bzw. Faserstoffe können allein oder in Mischung verwendet werden. Die Cellulose kann so, wie sie bei den vorgenannten Herstellprozessen anfällt ohne oder mit Nachreinigung, bevorzugt ohne Nachreinigung bzw. so wie sie bei der Papierherstellung vorliegt, verwendet werden.

Als Grundstoff für Cellulose, im Speziellen Holzstoff und Zellstoff eignen sich cellulosehaltige, faseraufweisende Rohstoffe wie beispielsweise Cellulose, Rohfasern, ganze Pflanzen, die Fasern enthaltend, oder Fasern enthaltende Pflanzenbestandteile wie Stängel, sowie ein- und mehrjährigen Pflanzen, Hölzer aller Art wie Weichholz- oder Hartholz, also Hölzer jeder beliebige Holzart wie Laub- oder Nadelhölzer, u.a. aus Industrierestholz oder Plantagenholz, beispielsweise Eukalyptus-, Fichten-, Buchen-, Kiefern-, Lärchen-, Linden-, Pappel-, Eschen-, Kastanien-, Tannenholz oder deren Gemische, bevorzugt Eukalyptus-, Fichten-, Buchen-, Kiefern-, Lärchen-, Linden-, Pappel-, Eschen-, Kastanien-, Tannenholz oder deren Gemische, besonders bevorzugt Eukalyptus-, Fichten-, Buchenholz oder deren Gemische, insbesondere Eukalyptus-, Fichtenholz oder deren Gemische, sowie Papier, Pappe, Karton, Altpapier, Altpappe und Altkarton.

Als einjährige Pflanzen eignen sich Hanf, Flachs, Schilf, Baumwolle, Weizen, Gerste, Roggen, Hafer, Zuckerrohr (Bagasse), Maisstängel, Sonnenblumenstängel, Sisal oder Kenaf. Weiterhin können faserhaltige Agrarabfälle wie Maisstängel oder Sonnenblumenstängel als Rohstoffe verwendet werden. Zur Herstellung von Fasermaterial aus Agrarabfällen eignen sich Getreidespreu wie Hafer- oder Reisspreu und Getreide-Stroh z.B. von Weizen, Gerste, Roggen oder Hafer.

Als mehrjährige Pflanzen eignen sich Hölzer aller Art, also Hölzer jeder beliebige Holzart wie zuvor beschrieben.

Unter dem Begriff Pulpe versteht man in diesem Zusammenhang die nach den mechanischen oder chemischen Verfahren erhältliche breiartige Masse (Maische), mit einem Feststoffgehalt von 0 bis 80 Gew.-%, bevorzugt 0,1 bis 60 Gew.-%, besonders bevorzugt 0,5 bis 50 Gew.-%, die aus der Zerkleinerung der zuvor genannten Rohstoffe stammen.

Pulpen können auch ausgehend von Abfall- und Altpapier, alleine oder in Mischungen mit anderen faserhaltigen Materialien hergestellt werden. Das dafür verwendete Altpapier kann dabei aus einem De-Inking Prozess oder aus einer Old-Corrugated Container Pulpe (OCC) stammen. Es können auch Mischungen aus Alt- und Neumaterial verwendet werden.

Bevorzugte cellulosehaltige Fasern enthalten gebleichte chemische Pulpen, bevorzugt gebleichte Kraft-Pulpen, bevorzugt Weichholz Kraft Pulpen und/oder Altpapier.

Die als Rohstoff verwendeten cellulosehaltigen Fasern können vor der Verwendung vorbehandelt werden. Solche Vorbehandlungen können das Entfernen toxischer oder unerwünschter Stoffe, Zerkleinern, Hämmern, Mahlen, Pinnen oder Waschen des Materials sein oder aber Kombinationen davon.

Erfindungsgemäß werden die cellulosehaltigen Fasern als Startmaterial als wässrige Mischung mechanischer Scherung unterworfen. Der Feststoffgehalt der Fasermischung beträgt in der Regel 10 bis 100 Gew.-%, normalerweise jedoch 10 bis 90 Gew.-%, bevorzugt 30 bis 70 Gew.-%, besonders bevorzugt 40 bis 60 Gew.-%, insbesondere 50 bis 60 Gew.-%.

Die Komponente B) kann thermostabile Biozide enthalten. Bevorzugte thermostabile Biozide sind ausgewählt aus der Gruppe der *2H*-Isothiazol-3-on Derivate, Glutaraldehyd, Pyrithion und seine Derivate und Benzalkoniumchlorid. Beispiele für *2H*-Isothiazol-3-on Derivate sind Methylisothiazolinon, Chlormethylisothiazolinon, Octylisothiazolinon und Benzisothiazolinon. Beispiele für Pyrithion Derivate sind Natriumpyrithion und Dipyrithion. Besonders bevorzugte thermostabile Biozide werden ausgewählt aus der Gruppe Methylisothiazolinon, Chlormethylisothiazolinon, Octylisothiazolinon und Benzisothiazolinon, Glutaraldehyd, Natriumpyrithion und Benzalkoniumchlorid.

Komponente C

Als Bindemittel eignen sich Harze wie Phenolformaldehydharze, Aminoplastharze, organische Isoyanate mit mindestens 2 Isocyanatgruppen oder deren Gemische. Die Harze können für sich alleine, als einziger Harzbestandteil oder Kombination aus zwei oder mehreren Harzbestandteilen der unterschiedlichen Harze der Gruppe Phenolformaldehydharze, Aminoplastharze und organische Isoyanate mit mindestens 2 Isocyanatgruppen eingesetzt werden.

Phenolformaldehydharze

Phenolformaldehydharze (auch PF-Harze genannt) sind dem Fachmann bekannt, siehe zum Beispiel Kunststoff-Handbuch, 2. Auflage, Hanser 1988, Band 10 "Duroplaste", Seiten 12 bis 40,

Aminoplastharze

Als Aminoplastharze können alle dem Fachmann, vorzugsweise die für die Herstellung von Holzwerkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben und können durch Umsetzen der Carbamidgruppen-haltigen Verbindungen, vorzugsweise Harnstoff, Melamin oder deren Gemischen, mit den Aldehyden, vorzugsweise Formaldehyd, in den gewünschten Molverhältnissen Carbamidgruppe zum Aldehyd, vorzugsweise in Wasser als Lösungsmittel, hergestellt werden.

Das Einstellen des gewünschten molaren Verhältnisses Aldehyd, vorzugsweise Formaldehyd zum gegebenenfalls teilweise mit organischen Resten substituierten Amino-Gruppe kann auch durch Zusatz von -NH$_2$-Gruppen-tragenden Monomeren zu formaldehydreicheren fertigen, vorzugsweise kommerziellen, Aminoplastharzen erfolgen. NH$_2$-Gruppen-tragende Monomere sind vorzugsweise Harnstoff, Melamin oder deren Gemische, besonders bevorzugt Harnstoff.

Als Aminoplastharze werden bevorzugt Polykondensationsprodukte aus Verbindungen mit mindestens einer, gegebenenfalls teilweise mit organischen Resten substituierten, Carbamidgruppe (die Carbamidgruppe wird auch als Carboxamidgruppe bezeichnet) und einem Aldehyd, vorzugsweise Formaldehyd, verstanden; besonders bevorzugt Harnstoff-Formaldehydharze (UF-Harze), Melamin-Formaldehydharze (MF-Harze) oder melaminhaltige Harnstoff-Formaldehydharze (MUF-Harze), insbesondere Harnstoff-Formaldehydharze, beispielsweise Kaurit® Leim-Typen der Firma BASF SE. Weiterhin ganz bevorzugte Aminoplastharze sind Polykondensationsprodukte aus Verbindungen mit mindestens einer, auch teilweise mit organischen Resten substituierten, Aminogruppe und Aldehyd, worin das molare Verhältnis Aldehyd zum gegebenenfalls teilweise mit organischen Resten substituierten Amino-Gruppe im Bereich von 0,3:1 bis 1:1, bevorzugt 0,3:1 bis 0,6:1, besonders bevorzugt 0,3:1 bis 0,45:1, ganz besonders bevorzugt 0,3:1 bis 0,4:1 liegt.

Die genannten Aminoplastharze werden üblicherweise in flüssiger Form, meist in einem flüssigen Medium suspendiert, vorzugsweise in wässriger Suspension oder aber auch als Feststoff eingesetzt.

Der Feststoffgehalt der Aminoplastharz-Suspensionen, vorzugsweise der wässrigen Suspension, liegt üblicherweise bei 25 bis 90 Gew.-%, vorzugsweise bei 50 bis 70 Gew.-%.

Der Feststoffgehalt des Aminoplast-Harzes in wässriger Suspension kann nach Günter Zeppenfeld, Dirk Grunwald, Klebstoffe in der Holz- und Möbelindustrie, 2. Auflage, DRW-Verlag, Seite 268 bestimmt werden. Zur Bestimmung des Feststoffgehalts von Aminoplast-Leimen wird 1 g Aminoplast-Leim in eine Wagschale genau eingewogen, am Boden fein verteilt und 2 Stunden bei 120°C in einem Trockenschrank getrocknet. Nach Temperierung auf Raumtemperatur in einem Exsikkator wird der Rückstand gewogen und als prozentualer Anteil der Einwaage berechnet.

Die Gewichtsangabe des Bindemittels bezieht sich im Hinblick auf die Aminoplastkomponente im Bindemittel auf den Feststoffgehalt der entsprechenden Komponente (bestimmt durch Verdunsten des Wassers bei 120°C, innerhalb von 2 h nach Günter Zeppenfeld, Dirk Grunwald, Klebstoffe in der Holz- und Möbelindustrie, 2. Auflage, DRW-Verlag, Seite 268) und im Hinblick auf das Isocyanat, insbesondere das PMDI, auf die Isocyanatkomponente an sich, also zum Beispiel ohne Lösungsmittel oder Emulgiermedium.

Organische Isocyanate

Als organische Isocyanate eignen sich organische Isocyanate mit mindestens zwei Isocyanatgruppen oder deren Gemische, insbesondere alle dem Fachmann, vorzugsweise die für die Herstellung von Holzwerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische, besonders bevorzugt das oligomere organische Isocyanat PMDI ("Polymeres Methylendiphenylendiisocyanat") das erhältlich ist durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz), ganz besonders bevorzugt Produkte der LUPRANAT®-Typenreihe der BASF SE, insbesondere LUPRANAT® M 20 FB der BASF SE.

Härter in der Komponente C

Das Bindemittel C) kann dem Fachmann bekannte Härter oder deren Gemische enthalten.

Als Härter eignen sich alle chemischen Verbindungen jeglichen Molekulargewichts, die die Polykondensation von Aminoplastharz oder Phenolformaldehydharz bewirken oder beschleunigen und solche, welche die Reaktion von organischem Isocyanat mit mindestens zwei Isocyanatgruppen mit Wasser oder anderen Verbindungen oder Substraten (zum Beispiel Holz), welche - OH oder -NH-, -NH$_2$- oder =NH-Gruppen enthalten, bewirken oder beschleunigen.

Als Härter für Aminoplastharze oder Phenolformaldehydharze eignen sich solche, die die Weiterkondensation katalysieren wie Säuren oder deren Salze oder wässrige Lösungen dieser Salze.

Als Säuren eignen sich anorganische Säuren wie HCl, HBr, HI, H$_2$SO$_3$, H$_2$SO$_4$, Phosphorsäure, Polyphosphorsäure, Salpetersäure, Sulfonsäuren, beispielsweise p-Toluolsulfonsäure, Methansulfonsäure, Trifluormethansulfonsäure, Nonafluorbutansulfonsäure, Carbonsäuren wie C$_1$- bis C$_8$-Carbonsäuren beispielsweise Ameisensäure, Es-

sigsäure, Propionsäure oder deren Gemische, bevorzugt anorganische Säuren wie HCl, $H_2SO_3$, $H_2SO_4$, Phosphorsäure, Polyphosphorsäure, Salpetersäure, Sulfonsäuren wie p-Toluolsulfonsäure, Methansulfonsäure, Carbonsäuren wie $C_1$- bis $C_8$-Carbonsäuren beispielsweise Ameisensäure, Essigsäure, besonders bevorzugt anorganische Säuren wie $H_2SO_4$, Phosphorsäure, Salpetersäure, Sulfonsäuren wie p-Toluolsulfonsäure, Methansulfonsäure, Carbonsäuren wie Ameisensäure, Essigsäure.

Als Salze eignen sich Halogenide, Sulfite, Sulfate, Hydrogensulfate, Carbonate, Hydrogencarbonate, Nitrite, Nitrate, Sulfonate, Salze von Carbonsäuren wie Formiate, Acetate, Propionate, bevorzugt Sulfite, Carbonate, Nitrate, Sulfonate, Salze von Carbonsäuren wie Formiate, Acetate, Propionate, besonders bevorzugt Sulfite, Nitrate, Sulfonate, Salze von Carbonsäuren wie Formiate, Acetate, Propionate, von protonierten, primären, sekundären und tertiären aliphatischen Aminen, Alkanolaminen, cyclischen, aromatischen Aminen wie $C_1$- bis $C_8$-Amine,Isopropylamin, 2-Ethylhexylamin, Di-(2-ethylhexyl)amin, Diethylamin, Dipropylamin, Dibutylamin, Diisopropylamin, tert-Butylamin, Triethylamin, Tripropylamin, Triisopropylamin, Tributylamin, Monoethanolamin, Morpholin, Piperidin, Pyridin, sowie Ammoniak, bevorzugt protonierte primäre, sekundäre, und tertiäre aliphatische Amine, Alkanolamine, cyclische Amine, cyclische aromatische Amine sowie Ammoniak, besonders bevorzugt protonierte Alkanolamine, cyclische Amine sowie Ammoniak oder deren Gemische.

Als Salze seien insbesondere genannt: Ammoniumchlorid, Ammoniumbromid, Ammoniumiodid, Ammoniumsulfat, Ammoniumsulfit, Ammoniumhydrogensulfat, Ammoniummethansulfonat, Ammonium-p-Toluolsulfonat, Ammoniumtrifluormethansulfonat, Ammoniumnonafluorbutansulfonat, Ammoniumphosphat, Ammoniumnitrat, Ammoniumformiat, Ammoniumacetat, Morpholiniumchlorid, Morpholiniumbromid, Morpholiniumiodid, Morpholiniumsulfat, Morpholiniumsulfit, Morpholiniumhydrogensulfat, Morpholiniummethansulfonat, Morpholinium-p-Toluolsulfonat, Morpholiniumtrifluormethansulfonat, Morpholiniumnonafluorbutansulfonat, Morpholiniumphosphat, Morpholiniumnitrat, Morpholiniumformiat, Morpholiniumacetat, Monoethanolammoniumchlorid, Monoethanolammoniumbromid, Monoethanolammoniumiodid, Monoethanolammoniumsulfat, Monoethanolammoniumsulfit, Monoethanolammoniumhydrogensulfat, Monoethanolammoniummethansulfonat, Monoethanolammonium-p-Toluolsulfonat, Monoethanolammoniumtrifluormethansulfonat, Monoethanolammoniumnonafluorbutansulfonat, Monoethanolammoniumphosphat, Monoethanolammoniumnitrat, Monoethanolammoniumformiat, Monoethanolammoniumacetat oder deren Gemische.

Ganz besonders bevorzugt werden die Salze in Form ihrer wässrigen Lösungen eingesetzt. Als wässrige Lösungen werden in diesem Zusammenhang verdünnte, gesättigte, übersättigte und auch teilgefällte Lösungen sowie gesättigte Lösungen mit einem Feststoffgehalt an nicht mehr lösbarem Salz verstanden.

Phenolformaldehydharze können auch alkalisch, bevorzugt mit Carbonaten oder Hydroxide wie Kaliumcarbonat und Natriumhydroxid ausgehärtet werden.

Gut geeignete Härter für organisches Isocyanat mit mindestens zwei Isocyanatgruppen, beispielsweise PMDI, können in vier Gruppen unterteilt werden: Amine, weitere Basen, Metallsalze und Organometallverbindungen, bevorzugt sind Amine. Derartige Härter sind beispielsweise in Michael Szycher, Szycher's Handbook of Polyurethanes, CRC Press, 1999, Seiten 10-1 bis 10-20 beschrieben.

Ferner geeignet sind Verbindungen, die die Reaktion von reaktiven Wasserstoffatomen, insbesondere Hydroxylgruppen, enthaltenden Verbindungen mit den organischen Isocyanaten stark beschleunigen.

Zweckmäßigerweise verwendet man als Härter basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, und Triethylendiamin.

Als Metallsalze eignen sich Salze von Metallen wie Eisen(II)-chlorid, Zinkchlorid, Bleioctoat und vorzugsweise Zinnsalze wie Zinndioctoat.

Als Organometallverbindungen eignen sich Organometallsalze wie Zinndioctoat, Zinndiethylhexoat und Dibutylzinndilaurat sowie insbesondere Mischungen aus tertiären Aminen und organischen Zinnsalzen.

Als weitere Basen eignen sich Amidine, wie 2,3-Dimethyl-3,4,5,6-tetrahydropyrimidin, Tetraalkyl-ammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.

Weitere Beispiele von Härtern für Aminoplastharze finden sich in M. Dunky, P. Niemz, Holzwerkstoffe und Leime, Springer 2002, Seiten 265 bis 269, solche Härter für Phenolformaldehydharze finden sich in M. Dunky, P. Niemz, Holzwerkstoffe und Leime, Springer 2002, Seiten 341 bis 352 und solche Härter für organische Isocyanate mit mindestens 2 Isocyanatgruppen finden sich in M. Dunky, P. Niemz, Holzwerkstoffe und Leime, Springer 2002, Seiten 385 bis 391.

Komponente D

Komponente D) sind expandierte Kunststoffteilchen, welche gegebenenfalls mit einem Bindemittel beschichtet sind.

Expandierte Kunststoffteilchen, vorzugsweise expandierte thermoplastische Kunststoffteilchen, werden aus expandierbaren Kunststoffteilchen, vorzugsweise expandierbaren thermoplastische Kunststoffteilchen, hergestellt. Beide basieren auf bzw. bestehen aus Polymeren, vorzugsweise thermoplastischen Polymeren, die sich verschäumen lassen. Diese sind dem Fachmann bekannt.

Gut geeignete derartige Polymere sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, $C_2$-$C_{10}$-Olefinhomopolymere, $C_2$-$C_{10}$-Olefincopolymere, Polyester oder deren Gemische, bevorzugt PVC (hart und weich), Polyurethane, Styrolhomopolymerisat, Styrolcopolymerisat oder deren Gemische, besonders bevorzugt Styrolhomopolymerisat, Styrolcopolymerisat oder deren Gemische, insbesondere Styrolhomopolymerisat, Styrolcopolymerisat oder deren Gemische.

Die oben beschriebenen bevorzugten oder besonders bevorzugten expandierbaren Styrolpolymerisaten oder expandierbaren Styrolcopolymerisate haben einen relativ geringen Gehalt an Treibmittel. Derartige Polymerisate werden auch als "treibmittelarm" bezeichnet. Ein gut geeignetes Verfahren zu Herstellung von treibmittelarmen expandierbarem Polystyrol oder expandierbarem Styrolcopolymerisat wird in US-A-5,112,875 beschrieben auf das hierin ausdrücklich Bezug genommen wird.

Wie beschrieben, können auch Styrolcopolymerisate eingesetzt werden. Vorteilhaft weisen diese Styrolcopolymerisate mindestens 50 Gew.-%, vorzugsweise mindestens 80 Gew.-% einpolymerisiertes Styrol auf. Als Comonomere kommen z. B. $\alpha$-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d. h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,0005 bis 0,5 Mol-%, bezogen auf Styrol, verwendet.

Auch Mischungen verschiedener Styrol(co)polymerisate können verwendet werden.

Gut geeignete Styrolhomopolymerisate oder Styrolcopolymerisate sind glasklares Polystyrol (GPPS), Schlagzähpolystyrol (HIPS), anionisch polymerisiertes Polystyrol oder Schlagzähpolystyrol (A-IPS), Styrol-$\alpha$-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Bevorzugt werden Styrolpolymerisate, Styrolcopolymerisate oder Styrolhomopolymerisate mit einem Molekulargewicht im Bereich von 70,000 bis 400,000 g/mol, besonders bevorzugt 190,000 bis 400,000 g/mol, ganz besonders bevorzugt 210,000 bis 400,000 g/mol eingesetzt.

Derartiges Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598.

Bestehen die expandierten Kunststoffteilchen aus unterschiedlichen Polymertypen, also Polymertypen, denen unterschiedliche Monomere zugrunde liegen, beispielsweise Polystyrol und Polyethylen oder Polystyrol und Homo-Polypropylen oder Polyethylen und Homo-Polypropylen, so können diese in unterschiedlichen Gewichtsverhältnissen vorliegen, die allerdings unkritisch sind.

Die expandierten Kunststoffteilchen werden im Allgemeinen in Form von Kugeln oder Perlen mit einem mittleren Durchmesser von 0,25 bis 10 mm, bevorzugt 0,4 bis 8,5 mm, besonders bevorzugt 0,4 bis 7 mm, insbesondere im Bereich von 1,2 bis 7 mm eingesetzt und weisen vorteilhaft eine kleine Oberfläche pro Volumen auf, beispielsweise in Form eines sphärischen oder elliptischen Partikels.

Die expandierten Kunststoffteilchen sind vorteilhaft geschlossenzellig. Die Offenzelligkeit nach DIN-ISO 4590 beträgt in der Regel weniger als 30 %.

Die expandierten Kunststoffteilchen weisen eine Schüttdichte, von 10 bis 150 kg/m³ auf, bevorzugt 30 bis 100 kg/m³, besonders bevorzugt 40 bis 80 kg/m³, insbesondere 50 bis 70 kg/m³. Die Schüttdichte wird üblicherweise durch Wiegen eines mit dem Schüttgut gefüllten definierten Volumens ermittelt.

Die expandierten Kunststoffteilchen haben in der Regel, wenn überhaupt, nur noch einen geringen Gehalt an Treibmittel. Der Gehalt an Treibmittel im expandierten Kunststoffteilchen liegt im Allgemeinen im Bereich von 0 bis 5,5 Gew.-%, vorzugsweise 0 bis 3 Gew.-%, bevorzugt 0 bis 2,5 Gew.-%, besonders bevorzugt 0 bis 2 Gew.-%, jeweils bezogen auf das expandierte Polystyrol oder expandierte Styrolcopolymerisat. 0 Gew.-% bedeutet hierin, dass kein Treibmittel mit den üblichen Nachweisverfahren nachgewiesen werden kann.

Diese expandierten Kunststoffteilchen können ohne oder mit, bevorzugt ohne weitere Maßnahmen zur Treibmittelverminderung und besonders bevorzugt ohne weitere Zwischenschritte zur Herstellung des lignocellulosehaltigen Stoffs weiterverwendet werden.

Üblicherweise weist das expandierbare Polystyrol oder expandierbare Styrolcopoly-merisat oder das expandierte Polystyrol oder expandierte Styrolcopolymerisat eine antistatische Beschichtung auf.

Die expandierten Kunststoffteilchen können wie folgt erhalten werden:
Kompakte expandierbare Kunststoffteilchen, üblicherweise Feststoffe die in der Regel keine Zellstruktur besitzen, welche ein ausdehnungsfähiges Medium (auch "Treibmittel" genannt) enthalten, werden durch Einwirkung von Wärme oder Druckänderung expandiert (oft auch als "aufschäumen" bezeichnet). Hierbei dehnt sich das Treibmittel aus, die Partikel nehmen an Größe zu und Zellstrukturen entstehen.

Dieses Expandieren wird im Allgemeinen in üblichen Aufschäumvorrichtungen, oft als "Vorschäumer" bezeichnet, durchgeführt. Derartige Vorschäumer können ortsfest installiert oder aber mobil sein.

Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert.

In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert.

Vorzugsweise wird die Expandierung einstufig durchgeführt.

Für die Herstellung von expandiertem Polystyrol als Komponente D) und/oder expandiertem Styrolcopolymerisat als Komponente D) werden im Allgemeinen die expandierbaren Styrolhomopolymerisate oder expandierbaren Styrolcopolymerisate in bekannter Weise durch Erhitzen auf Temperaturen oberhalb ihres Erweichungspunkts, beispielsweise mit Heißluft oder vorzugsweise Dampf und oder Druckänderung expandiert (oft auch als "aufgeschäumt" bezeichnet), wie zum Beispiel in Kunststoff Handbuch 1996, Band 4 "Polystyrol", Hanser 1996, Seiten 640 bis 673 oder US-A-5,112,875 beschrieben. Das expandierbare Polystyrol oder expandierbare Styrolcopolymerisat ist in der Regel in an sich bekannter Weise durch Suspensionspolymerisation oder mittels Extrusionsverfahren wie oben beschrieben erhältlich. Beim Expandieren dehnt sich das Treibmittel aus, die Polymerpartikel nehmen an Größe zu und Zellstrukturen entstehen.

Die Herstellung des expandierbaren Polystyrols und/oder Styrolcopolymerisats erfolgt in der Regel in an sich bekannter Weise durch Suspensionspolymerisation oder mittels Extrusionsverfahren.

Bei der Suspensionspolymerisation wird Styrol, gegebenenfalls unter Zusatz weiterer Comonomere in wässriger Suspension in Gegenwart eines üblichen Suspensionsstabilisators mittels radikalbildender Katalysatoren polymerisiert. Das Treibmittel und gegebenenfalls weitere Zusatzstoffe können dabei bei der Polymerisation mit vorgelegt werden oder im Laufe der Polymerisation oder nach beendeter Polymerisation dem Ansatz zugefügt werden. Die erhaltenen perlförmigen, mit Treibmittel imprägnierten, expandierbaren Styrolpolymerisate werden nach beendeter Polymerisation von der wässrigen Phase abgetrennt, gewaschen, getrocknet und gesiebt.

Bei dem Extrusionsverfahren wird das Treibmittel beispielsweise über einen Extruder in das Polymer eingemischt, durch eine Düsenplatte gefördert und unter Druck zu Partikeln oder Strängen granuliert.

Die so erhaltenen expandierten Kunststoffteilchen bzw. die beschichteten expandierten Kunststoffteilchen können zwischengelagert und transportiert werden.

Als Treibmittel eignen sich alle dem Fachmann bekannten Treibmittel, beispielsweise aliphatische $C_3$- bis $C_{10}$-Kohlenwasserstoffe wie Propan, n-Butan, Isobutan, n-Pentan, Isopentan, Neopentan, Cyclopentan und/oder Hexan und dessen Isomere, Alkohole, Ketone, Ester, Ether, halogenierte Kohlenwasserstoffe oder deren Gemische, bevorzugt n-Pentan, Isopentan, Neopentan, Cyclopentan oder deren Gemisch, besonders bevorzugt handelsübliche Pentanisomerengemische aus n-Pentan und iso-Pentan.

Der Gehalt an Treibmittel im expandierbaren Kunststoffteilchen liegt im allgemeinen im Bereich von 0,01 bis 7 Gew.-%, vorzugsweise 0,01 bis 4 Gew.-%, bevorzugt 0,1 bis 4 Gew.-%, besonders bevorzugt 0,5 bis 3,5 Gew.-%, jeweils bezogen auf das treibmittelhaltige expandierbare Polystyrol oder Styrolcopolymerisat.

Beschichtung der Komponente D

Als Beschichtungsmittel für die expandierbaren bzw. expandierten Kunststoffteilchen eignen sich alle Verbindungen der Komponenten B und C sowie Verbindungen K, die eine klebrige Schicht bilden, oder deren Gemische, bevorzugt alle Verbindungen der Komponente C sowie Verbindungen K, die eine klebrige Schicht bilden, besonders bevorzugt alle Verbindungen der Komponente C. Für den Fall, dass das Beschichtungsmittel aus den Komponenten C ausgewählt wurde, können Beschichtungsmittel und Komponente C im Lignocellulosewerkstoff gleich oder verschieden, bevorzugt gleich sein.

Als Verbindungen K, die eine klebrige Schicht bilden, eignen sich Polymere auf Basis von Monomeren wie vinylaromatischen Monomeren, wie $\alpha$-Methylstyrol, p-Methylstyrol, Ethylstyrol, tert.- Butylstyrol, Vinylstyrol, Vinyltoluol, 1,2-Diphenylethylen, 1,1-Diphenylethylen, Alkenen, wie Ethylen oder Propylen, Dienen, wie 1,3-Butadien, 1,3-Pentadien, 1,3-Hexadien, 2,3-Dimethylbutadien, Isopren, Piperylen oder Isopren, $\alpha$-$\beta$-ungesättigte Carbonsäuren, wie Acrylsäure und Methacrylsäure, deren Estern, insbesondere Alkylester, wie $C_1$- bis $C_{10}$-Alkylester der Acrylsaeure, insbesondere die Butylester, vorzugsweise n-Butylacrylat, und die $C_1$- bis $C_{10}$-Alkylester der Methacrylsäure, insbesondere Methylmethacrylat (MMA), oder Carbonsäureamide, beispielsweise Acrylsäureamid und Methacrylsäureamid. Diese Polymere können gegebenenfalls 1 bis 5 Gew.- % Comonomere, wie (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure, Methylolacrylamid oder das Natriumsalz der Vinylsulfonsäure enthalten. Bevorzugt sind diese Polymere aus einem oder mehreren der Monomeren Styrol, Butadien, Acrylsäure, Methacrylsäure, $C_1$- bis $C_4$-Alkylacrylaten, $C_1$- bis $C_4$-Alkylmethacrylaten, Acrylsäureamid, Methacrylsäureamid und Methylolacrylsäureamid aufgebaut. Des Weiteren eignen sich insbesondere Acrylatharze, besonders bevorzugt in Form der wässrigen Polymerdispersion, sowie Homooligomere oder Homopolymere von $\alpha$-$\beta$-ungesättigten Carbonsäuren oder deren Anhydriden sowie Co-Oligomere oder Co-Polymere von $\alpha$-$\beta$-ungesättigten Carbonsäuren und/oder deren Anhydriden mit ethylenisch ungesättigten Co-Monomeren.

Geeignete Polymerdispersionen sind beispielsweise durch radikalische Emulsionspolymerisation von ethylenisch ungesättigten Monomeren, wie Styrol, Acylate, Methacrylate oder deren Gemisch, wie in WO-A-00/50480 beschrieben, erhältlich, bevorzugt reine Acrylate oder Styrol-Acrylate, welche aus den Monomeren Styrol, n-Butylacrylat, Methylmetharcylat (MMA), Methacrylsaeure, Acrylamid oder Methylolacrylamid, aufgebaut sind.

Die Herstellung der Polymerdispersion oder -suspension kann in an sich bekannter Weise, etwa durch Emulsions-, Suspensions-, oder Dispersionspolymerisation, bevorzugt in wässriger Phase, erfolgen. Man kann das Polymer auch durch Lösungs- oder Massepolymerisation herstellen, gegebenenfalls Zerteilen und die Polymerpartikel anschließend in Wasser in üblicher Weise dispergieren.

Das Beschichtungsmittel kann mit dem expandierbaren Kunststoffteilchen ("Variante I") oder mit dem expandierten Kunststoffteilchen in Berührung gebracht. ("Variante II"); vorzugsweise wird Variante (II) verwendet.

Der erfindungsgemäße beschichtete Kunststoffteilchen können beispielsweise dadurch hergestellt werden, dass man

a) Kunststoffteilchen, bevorzugt nicht expandierbare Kunststoffteilchen, aufschmilzt, ein oder mehreren Beschichtungsmitteln und Treibmittel in beliebiger Reihenfolge zugibt, möglichst homogen vermischt und zu Schaumstoffpartikeln aufschäumt,

b) expandierbare Kunststoffteilchen, mit ein oder mehreren Beschichtungsmitteln beschichtet und zu Schaumstoffpartikeln aufschäumt oder

c) expandierbare Kunststoffteilchen während oder nach dem Vorschäumen mit ein oder mehreren Beschichtungsmitteln beschichtet.

Weiterhin kann das in Berührung bringen mit den üblichen Verfahren geschehen, beispielsweise durch Besprühen, Tauchen, Benetzen oder Auftrommeln der expandierbaren bzw. expandierten Kunststoffteilchen mit dem Beschichtungsmittel bei einer Temperatur von 0 bis 150°C, bevorzugt 10 bis 120°C, besonders bevorzugt 15 bis 110°C und einem Druck von 0,01 bis 10 bar, bevorzugt 0,1 bis 5 bar, besonders bevorzugt bei Normaldruck (Atmosphärendruck); bevorzugt wird das Beschichtungsmittel im sogenannten Vorschäumer unter den zuvor genannten Bedingungen zugesetzt.

Komponente E)

Die erfindungsgemäßen Lignocellulosewerkstoffen können dem Fachmann bekannte und handelsübliche Additive als Komponente E in Mengen von 0 bis 68 Gew.-%, bevorzugt 0 bis 10 Gew.-%, besonders bevorzugt 0,5 bis 8 Gew.-%, insbesondere 1 bis 3 Gew.-% enthalten.

Als Additive eignen sich beispielsweise Hydrophobierungsmittel wie Paraffin-Emulsionen, Pilzschutzmittel, Formaldehydfänger, wie Harnstoff oder Polyamine, und Flammschutzmittel, Streckmittel, Füllmittel. Weitere Beispiele von Additiven finden sich in M. Dunky, P. Niemz, Holzwerkstoffe und Leime, Springer 2002, Seiten 436 bis 444.

Mengen der Komponenten im Lignocellulosewerkstoff

Die Gesamtmenge der Trockenmasse der mikrofibrillierten Cellulose, bezogen auf die Trockenmasse der lignocellulosehaltigen Stoffe, liegt in der Regel zwischen 0,01 bis 50 Gew.-%, bevorzugt zwischen 0,05 und 40 Gew.-%, besonders bevorzugt zwischen 0,1 und 30 Gew.-%.

Die Gesamtmenge des Bindemittels C), bezogen auf die lignocellulosehaltigen Stoffe, liegt in der Regel im Bereich von 1 bis 50 Gew.-%, bevorzugt 2 bis 15 Gew.-%, besonders bevorzugt 3 bis 10 Gew.-%, wobei die Menge

a) des Phenolformaldehydharzes bezogen auf die lignocellulosehaltigen Stoffe in der Regel im Bereich von 0 bis 50 Gew.-%, bevorzugt 4 bis 20 Gew.-%, besonders bevorzugt 5 bis 15 Gew.-%,

b) des Aminoplastharzes (als Feststoff gerechnet bezogen auf die lignocellulosehaltigen Stoffe in der Regel im Bereich von 0 bis 45 Gew.-%, bevorzugt 4 bis 20 Gew.-%, besonders bevorzugt 5 bis 15 Gew.-% und

c) des organischen Isocyanats bezogen auf die lignocellulosehaltigen Stoffe in der Regel im Bereich von 0 bis 7 Gew.-%, vorzugsweise 0,1 bis 5 Gew.-%, besonders bevorzugt 0,5 bis 4 Gew.-% liegt.

Die Gesamtmenge des Beschichtungsmittels auf den expandierten Kunststoffteilchen D) {bezogen auf die Menge der nicht beschichteten Kunststoffteilchen} liegt im Bereich von 0 bis 20 Gew.-%, bevorzugt 0 bis 15 Gew.-%, besonders bevorzugt 0 bis 10 Gew.-%.

Die gegebenenfalls beschichteten, expandierten Kunststoffteilchen D) liegen in der Regel auch nach dem Verpressen zum Lignocellulosewerkstoff, vorzugsweise Holzwerkstoff, vorzugsweise mehrschichtigen Lignocellulosewerkstoff, besonders bevorzugt mehrschichtigen Holzwerkstoff, in einem praktisch ungeschmolzenen Zustand vor. Das bedeutet, dass die Kunststoffteilchen D) in der Regel nicht in die Lignocellulose-Teilchen eingedrungen sind oder diese imprägniert haben, sondern zwischen den Lignocellulose-Teilchen verteilt sind. Üblicherweise lassen sich die Kunststoffteilchen D) mit physikalischen Verfahren, zum Beispiel nach dem Zerkleinern des Lignocellulosewerkstoffs, von der Lignocellulose abtrennen.

Die Gesamtmenge der beschichteten, expandierten Kunststoffteilchen D), bezogen auf den lignocellulosehaltigen, vorzugsweise holzhaltigen Stoff, liegt im Bereich von 0 bis 25 Gew.-%, vorzugsweise 0 bis 20 Gew.-%, besonders bevorzugt 0 bis 15 Gew.-%.

Mehrschichtverfahren

Die vorliegende Erfindung betrifft weiterhin ein Verfahren zur Herstellung eines ein- oder mehrschichtigen Lignocellulosewerkstoffes der mindestens drei Schichten enthält, wobei entweder nur die mittlere Schicht oder mindestens ein Teil der mittleren Schichten einen lignocellulosehaltigen Stoff wie oben definiert enthält oder außer der mittlere Schicht oder mindestens einem Teil der mittleren Schichten mindestens eine weitere Schicht einen lignocellulosehaltigen Stoff wie oben definiert enthält, wobei man die Komponenten für die einzelnen Schichten übereinanderschichtet und unter erhöhter Temperatur und erhöhtem Druck verpreßt.

Die mittlere Dichte des erfindungsgemäßen mehrschichtigen, vorzugsweise des erfindungsgemäßen dreischichtigen, Lignocellulosewerkstoffs, vorzugsweise Holzwerkstoffs ist in der Regel nicht kritisch.

Üblicherweise haben höherdichte erfindungsgemäße mehrschichtige, vorzugsweise erfindungsgemäße dreischichtige, Lignocellulosewerkstoffe, vorzugsweise Holzwerkstoffe eine mittlere Dichte im Bereich von mindestens 600 bis 900 kg/m$^3$, bevorzugt 600 bis 850 kg/m$^3$, besonders bevorzugt 600 bis 800 kg/m$^3$.

Üblicherweise haben niedrigdichte erfindungsgemäße mehrschichtige, vorzugsweise erfindungsgemäße dreischichtige, Lignocellulosewerkstoffe, vorzugsweise Holzwerkstoffe eine mittlere Dichte im Bereich von 200 bis 600 kg/m$^3$, bevorzugt 300 bis 600 kg/m$^3$, besonders bevorzugt 350 bis 500 kg/m$^3$.

Bevorzugte Parameterbereiche sowie bevorzugte Ausführungsformen im Hinblick auf die mittlere Dichte des lignocellulosehaltigen, vorzugsweise holzhaltigen Stoffs und im Hinblick auf die Komponenten sowie deren Herstellungsverfahren A), B) ,C), D) und E) sowie die Kombination der Merkmale entsprechen den oben beschriebenen.

Mittlere Schichten im Sinne der Erfindung sind alle Schichten, die nicht die äußeren Schichten sind.

Die mikrofibrillierte Cellulose kann erfindungsgemäß auf verschieden Wege aufgebracht werden:

a) Aufsprühen einer flüssigen MFC-Formulierung (Lösung, Dispersion, Suspension) auf die Holzspäne/-fasern oder

b) Mischen der festen, bevorzugt pulverförmigen MFC mit den Holzspänen/-fasern oder

c) Herstellen einer flüssig oder festen MFC-Bindemittelmischung und Aufbringen bzw. Mischen dieser auf die / mit den Holzspänen/-fasern oder

d) Zugabe von MFC vor oder während der Herstellung der Holzspäne/-fasern im Zerspaner oder Refiner

Methode a)

Das Aufsprühen einer flüssigen MFC Formulierung auf Holzspäne/-fasern kann vor oder nach dem Aufbringen des Bindemittels C) geschehen. Als Lösemittel dient Wasser, bevorzugt Leitungswasser, deionisiertes Wasser, entsalztes Wasser oder destilliertes Wasser. Die Konzentration der MFC in der wässrigen Formulierung wird so gewählt, dass sie noch problemlos auf die Holzspäne aufgesprüht werden kann und sich die MFC gleichmäßig über die Späne verteilt. Der Feststoffgehalt der MFC-Formulierung liegt dabei zwischen 0,01 und 20 %, bevorzugt zwischen 0,05 und 15 %, besonders bevorzugt zwischen 0,1 und 10 %.

Methode b)

Die Zugabe der festen MFC zu den Holzspänen/-fasern kann vor oder nach dem Aufbringen des Bindemittels C) erfolgen. Die dabei verwendete MFC sollte pulverförmig und rieselfähig sein. Die Menge an MFC bezogen auf die Menge an Holzspänen /-fasern liegt zwischen 0,01 und 50 Gew.-%, bevorzugt zwischen 0,1 und 30 Gew.-%, besonders bevorzugt zwischen 0,1 und 15 Gew.-%.

Methode c)

Die MFC wird im Bindemittel C) einformuliert, so dass

i) eine weiterhin flüssige MFC-Bindemittel entsteht
ii) das Bindemittel C) vollständig von den MFC aufgesogen wird und eine feste Formulierung entsteht.

Bei der Herstellung der weiterhin flüssigen MFC-Formulierung i) muss darauf geachtet werden, dass die Konzentration an MFC in der Formulierung so gewählt wird, dass diese noch problemlos auf die Holzspäne/-fasern aufgesprüht werden kann. Die Menge an MFC bezogen auf den Feststoffgehalt des Bindemittels liegt bevorzugt zwischen 0,001 und 20 Gew.-%, besonders bevorzugt zwischen 0,01 und 10 Gew.-%, besonders bevorzugt zwischen 0,1 und 5 Gew.-%. Bei der Herstellung der festen Formulierung ii) wird die MFC mit gerade so viel Bindemittel C) versetzt, dass der entstehende Feststoff gerade noch pulverförmig und rieselfähig ist.

Methode d)

Die MFC wird bevorzugt als Granulat bei der Herstellung der Holzspäne/-fasern zugegeben. Bevorzugt wird die MFC bei der Herstellung der Holzspäne im oder vor dem Zerspaner bzw. bei der Herstellung der Holzfasern im oder vor dem Refiner zu den Hackschnitzeln gegeben. Die Menge an MFC bezogen auf die Menge an Holzspänen /-fasern liegt zwischen 0,01 und 50 Gew.-%, bevorzugt zwischen 0,1 und 30 Gew.-%, besonders bevorzugt zwischen 0,5 und 15 Gew.-%.

Bevorzugt enthält der erfindungsgemäße mehrschichtige Lignocellulosewerkstoff, vorzugsweise mehrschichtige Holzwerkstoff drei Lignocelluloseschichten, vorzugsweise Holzstoffschichten, wobei die äußeren Deckschichten in Summe in der Regel dünner sind als die innere(n) Schicht(en).

Das für die äußeren Schichten verwendete Bindemittel ist üblicherweise ein Amino-plastharz, beispielsweise Harnstoff-Formaldehydharz (UF), Melamin-Formaldehydharz (MF), Melamin-Harnstoff-Formaldehydharz (MUF) oder das erfindungsgemäße Bindemittel C). Vorzugsweise ist das für die äußeren Schichten verwendete Bindemittel ein Aminoplastharz, besonders bevorzugt ein Harnstoff-Formaldehydharz, ganz besonders bevorzugt ein Aminoplastharz worin das molare Formaldehyd zu -NH$_2$-Gruppen-Verhältnis im Bereich von 0,3:1 bis 3:1 liegt.

In einer bevorzugten Ausführungsform enthalten die äußeren Schichten (üblicherweise "Deckschichten" genannt) keine expandierten Kunststoffteilchen D).

Die Dicke des erfindungsgemäßen mehrschichtigen Lignocellulosewerkstoffs, vorzugsweise mehrschichtigen Holzwerkstoffs variiert mit dem Anwendungsgebiet und liegt in der Regel im Bereich von 0,5 bis 100 mm, vorzugsweise im Bereich von 10 bis 40 mm, insbesondere 12 bis 40 mm.

Die Verfahren zur Herstellung von mehrschichtigen Holzwerkstoffen sind im Prinzip bekannt und zum Beispiel in M. Dunky, P. Niemz, Holzwerkstoffe und Leime, Springer 2002, Seiten 91 bis 150 beschrieben.

Ein Beispiel für ein Verfahren zur Herstellung eines erfindungsgemäßen mehrschichtigen Holzwerkstoffs wird im Folgenden beschrieben.

Gegebenenfalls wird Komponente D zunächst aus expandierbaren Kunststoffteilchen aufgeschäumt und gegebenenfalls mit Beschichtungsmittel beschichtet.

Nach der Zerspanung des Holzes werden die Späne getrocknet. Danach werden gegebenenfalls Grob- und Feinanteile entfernt. Die verbleibenden Späne werden durch Sieben oder Sichten im Luftstrom sortiert. Das gröbere Material wird für die Mittelschicht, das feinere für die Deckschichten eingesetzt.

Die Deckschichtspäne werden getrennt von den Mittelschichtspänen mit Komponente B) als 2,5 Gew.-% wässrigen Suspension, Komponente C), Härter, bevorzugt werden diese Härter kurz vor der Verwendung der Komponente C zugesetzt, und gegebenenfalls Komponente E beleimt, beziehungsweise vermischt. Diese Mischung wird nachfolgend als Deckschichtmaterial bezeichnet.

Die Mittelschichtspäne werden getrennt von den Deckschichtspänen mit der Komponente B) als 2,5 Gew.-% wässrigen Suspension, gegebenenfalls mit der gegebenenfalls beschichteten Komponente D), Komponente C), Härter, bevorzugt werden diese Härter kurz vor der Verwendung der Komponente C) zugesetzt, und gegebenenfalls Komponente E beleimt, beziehungsweise vermischt. Diese Mischung wird anschließend als Mittelschichtmaterial bezeichnet.

Anschließend werden die Späne gestreut.

Zunächst wird das Deckschichtmaterial auf das Formband gestreut, anschließend das Mittelschichtmaterial - enthaltend die beschichtete Komponenten B), C) und gegebenenfalls D) und E) -und schließlich noch einmal Deckschichtmaterial. Das Deckschichtmaterial wird dabei so geteilt, dass beide Deckschichten in etwa gleich viel Material enthalten. Der so erzeugte dreischichtige Spänekuchen wird kalt (in der Regel bei Raumtemperatur) vorverdichtet und anschließend heiß gepresst.

Das Verpressen kann nach allen dem Fachmann bekannten Verfahren erfolgen. Üblicherweise wird der Holzpartikelkuchen bei einer Press-Temperatur von 150 bis 230°C auf die gewünschte Dicke gepresst. Die Pressdauer beträgt normalerweise 3 bis 15 Sekunden pro mm Plattendicke. Man erhält eine dreischichtige Spanplatte.

Die mechanische Festigkeit kann durch die Messung der Querzugsfestigkeit nach EN 319 bestimmt werden.

Die Zugabe der mikrofibrillierten Cellulose zu den Holzspänen/-fasern bewirkt eine Verbesserung der Querzugsfestigkeit und erlaubt die Herstellung von Lignocellulosewerkstoffen mit reduzierter Gesamtmenge an Bindemittel. Weiterhin können leichte Lignocellulosewerkstoffe hergestellt werden.

Lignocellulosewerkstoffe, insbesondere mehrschichtige Holzwerkstoffe, sind eine kostengünstige und Ressourcen schonende Alternative zu Massivholz und haben große Bedeutung und werden verwendet zur Herstellung von Gegenständen aller Art und im Baubereich, insbesondere zur Herstellung von Möbeln und Möbelteilen (im Möbelbau), von Verpackungsmaterialien, von Laminatfußböden und als Baumaterialien, im Hausbau oder im Innenausbau oder in Kraftfahrzeugen.

Die mikrofibrillierte Cellulose eignet sich zur Herstellung lignocellulosehaltiger Formkörper (Verwendung).

Beispiele

Herstellung der Komponente B)

Die verwendete mikrofibrillierte Cellulose wurde nach dem in WO-A-2010/149711 beschriebenen Prozess hergestellt.

Herstellung einer Dispersion der Komponente B)

3800 g Wasser wurden mit 200 g mikrofibrillierter Cellulose (50 % Feststoffgehalt) mit Hilfe eines Ultra Turrax T50 von Janke&Kunkel verrührt, bis eine homogene Suspension erhalten wurde. Kurz vor der Verwendung der Suspension wurde die Homogenität der Suspension noch einmal überprüft und gegebenenfalls durch erneutes Rühren wieder hergestellt.

Herstellung der Platten

Als Leime wurde Harnstoff-Formaldehydleim (Kaurit® Leim 347 der BASF SE) verwendet. Der Feststoffgehalt wurde jeweils mit Wasser auf 67 Gew.-% eingestellt.

Herstellung des Deckschichtmaterials

In einem Mischer wurden 500 g Späne mit 40 g der zuvor hergestellten MFC Suspension versetzt und für 60 s vermischt. Anschließend wurden 102 g einer Leimflotte aus 100 Teilen Kaurit®-Leim 347 und 1 Teil einer 52%-igen wässrigen Ammoniumnitratlösung, 0,5 Teilen Harnstoff, 0,7 Teilen einer 44%-igen wässrigen Paraffindispersion und 40 Teilen Wasser aufgebracht.

Herstellung des Mittelschichtmaterials

In einem Mischer wurden 500 g Späne (Komponente A) mit 40 g der zuvor hergestellten MFC Suspension für 60 s vermischt. Anschließend wurden 95 g einer Leimflotte aus 100 Teilen Kaurit®-Leim 347 und 4 Teilen einer 52%-igen wässrigen Ammoniumnitratlösung, 1,3 Teilen Harnstoff und 1,1 Teilen einer 44%-igen wässrigen Paraffindispersion aufgebracht.

Verpressen der beleimten Späne

Die mit der mikrofibrillierte Cellulose behandelte und beleimten Späne wurden in einer 30x30 cm-Form wie folgt ausgebracht:
Zunächst wurde die Hälfte des Deckschichtmaterials in die Form gestreut. Anschließend wurde 50 bis 100 % der Mittelschichtmaterials darüber geschichtet. Zuletzt wurde die zweite Hälfte Deckschichtmaterials darüber geschichtet und kalt vorverdichtet. Anschließend wurde in einer Heißpresse gepresst (Presstemperatur 210°C, Presszeit 120 s). Die Solldicke der Platte betrug jeweils 16mm.

Untersuchung des leichten holzhaltigen Stoffs

Dichte:
Die Bestimmung der Dichte erfolgte 24 Stunden nach Herstellung. Dazu wurde das Verhältnis aus Masse und Volumen eines Prüfkörpers bei demselben Feuchtegehalt bestimmt. Die quadratischen Prüfkörper wiesen eine Seitenlänge von 50 mm, bei einer Genauigkeit von 0,1 mm, auf. Die Dicke des Prüfkörpers wurde in dessen Mitte mit einer Genauigkeit von 0,05 mm gemessen. Die Waage zur Bestimmung der Prüfkörpermasse hatte eine Genauigkeit von 0,01g. Die Rohdichte $\rho$ (kg/m$^3$) eines Prüfkörpers wurde nach folgender Formel berechnet:

$$\rho = m/(b_1 * b_2 * d) * 10^6$$

Dabei ist:

m die Masse des Prüfkörpers, in Gramm, und
$b_1$, $b_2$ und d die Breite und Dicke des Prüfkörpers, in Millimeter.

Eine genaue Beschreibung der Durchführung ist z.B. DIN EN 323 zu entnehmen.
Querzugsfestigkeit:
Die Bestimmung der Querzugsfestigkeit erfolgt senkrecht zur Plattenebene. Der Prüfkörper wurde dazu mit einer gleichmäßig verteilten Zugkraft bis zum Bruch belastet. Die quadratischen Prüfkörper wiesen eine Seitenlänge von 50 mm, bei einer Genauigkeit von 1 mm, und Winkel von genau 90° auf. Weiterhin waren die Kanten sauber und gerade sein. Die Prüfkörper wurde mittels eines geeigneten Klebstoffes, beispielsweise ein Epoxydharz, mit den Jochen verklebt und mindestens 24 h im Klimaschrank bei 20°C und 65 % Luftfeuchtigkeit getrocknet. Der so vorbereitete Prüfkörper wurde nun in die Prüfmaschine auf beiden Seiten mit einem Wellengelenk selbstausrichtend eingespannt und anschließend mit konstanter Geschwindigkeit bis zum Bruch belastet und die dafür benötigte Kraft gemessen. Die Querzugfestigkeit $f_t$ (N/mm$^2$) wurde nach folgender Formel berechnet:

$$f_t = F_{max}/(a * b)$$

Dabei ist:

$F_{max}$ die Bruchkraft in Newton
a,b die Länge und Breite des Prüfkörpers in Millimeter.

Eine genaue Beschreibung der Durchführung ist z.B. DIN EN 319 zu entnehmen.

Biegefestigkeit

Die Bestimmung der Biegefestigkeit erfolgte durch Aufbringen einer Last in der Mitte eines an zwei Punkten aufliegenden Prüfkörpers. Der Prüfkörper wies eine Breite von 50 mm und eine Länge von der 20 fachen Nenndicke plus 50 mm, maximal jedoch 1050 mm und minimal 150 mm, auf. Der Prüfkörper wurde nun flach auf zwei Auflagen platziert, deren Abstand zwischen den Mitten dem Zwanzigfachen der Dicke des Prüfkörpers entsprach und anschließend in der Mitte mit einer Kraft bis zum Bruch belastet und diese Kraft gemessen. Die Biegefestigkeit $f_m$ (N/mm$^2$) wurde nach folgender Formel berechnet:

$$f_m = (3 * F_{max} * l)/(2 * b * t^2)$$

Dabei ist:

$F_{max}$ die Bruchkraft in Newton
l der Abstand der der Mitten der Auflagen in Millimeter

b die Breite des Prüfkörpers in Millimeter

t die Dicke des Prüfkörpers in Millimeter.

Eine genaue Beschreibung der Durchführung ist der DIN EN 310 zu entnehmen.

Schraubenausziehwiderstand

Die Bestimmung des Schraubenausziehwiderstands erfolgte durch Messen der Kraft, die benötigt wird, um eine Schraube achsenparallel aus dem Prüfkörper herauszuziehen. Die quadratischen Prüfkörper wiesen eine Seitenlänge von 75 mm, bei einer Genauigkeit von 1 mm, auf. Zunächst wurden Führungslöcher, Durchmesser 2,7 mm ($\pm$ 0,1 mm), Tiefe 19 ($\pm$ 1 mm), senkrecht zur Oberfläche des Prüfkörpers in den Mittelpunkt der Oberfläche gebohrt. Anschließend wurde für die Prüfung eine Stahlschraube mit Nennmaß 4,2 mm $\times$ 38 mm, mit einem ST 4,2 Gewinde nach ISO 1478 und einer Gewindesteigung von 1,4 mm in den Prüfkörper eingebracht, so dass 15 mm ($\pm$ 0,5 mm) des vollständigen Gewindes eingebracht wurden. Der Prüfkörper wurde in einem Metallrahmen befestigt und über einen Bügel wurde auf die Unterseite des Schraubenkopfes eine Kraft angelegt und die Maximalkraft gemessen, bei der die Schraube herausgezogen wurde.

Die Ergebnisse der Versuche sind in der Tabelle zusammengestellt.

Die Mengenangaben beziehen sich immer auf die Trockensubstanz. Bei der Angabe der Gewichtsteile wurde das trockene Holz bzw. die Summe des trockenen Holzes und des Füllstoffs auf 100 Teile gesetzt. Bei der Angabe der Gew.-% ist die Summe aller trockenen Bestandteile des leichten holzhaltigen Stoffs gleich 100 %.

Die Versuche in der Tabelle ohne Zusatz von Komponente Verstärkungen dienen zum Vergleich und wurden ohne mikrofibrillierte Cellulose durchgeführt.

[1] = Vergleichsversuch ohne mikrofibrillierte Cellulose

[2] = Vergleichsversuche aus Holz als Roh- und Werkstoff 1970, 28, 3, Seite 101 bis104 Versuch 10 entspricht Beispiel E, Versuch 11 entspricht Beispiel K.

| Versuch | Angestrebte Dichte [kg/m$^3$] | Mengenverhältnisse: Mittelschichtmaterial / Deckschichtmaterial (Gesamt) [g] |
|---------|------------------------------|------------------------------------------------------------------------------|
| 1[1] | 550 | 569 / 281 (850) |
| 2[1] | 600 | 644 / 316 (960) |
| 3[1] | 650 | 696 / 344 (1040) |
| 4 | 550 | 569 / 281 (850) |
| 5 | 600 | 644 / 316 (960) |
| 6 | 650 | 696 / 344 (1040) |
| 7 | 550 | 569 / 281 (850) |
| 8 | 600 | 644 / 316 (960) |
| 9 | 650 | 696 / 344 (1040) |
| 10 | Siehe [2] | |
| 11 | | |

| Versuch | Dichte [kg/m$^3$] | Querzugsfestigkeit [N/mm$^2$] | Biegefestigkeit [N/mm$^2$] | Schraubenausziehwiderstand [N] |
|---------|-------------------|-------------------------------|----------------------------|-------------------------------|
| 1[1] | 532 | 0,49 | 13,41 | 465 |
| 2[1] | 619 | 0,61 | 22,80 | 645 |
| 3[1] | 667 | 0,71 | 24,01 | 745 |
| 4 | 553 | 0,64 | 15,79 | 549 |
| 5 | 609 | 0,73 | 21,05 | 720 |
| 6 | 657 | 0,92 | 24,79 | 773 |

(fortgesetzt)

| Versuch | Dichte [kg/m$^3$] | Querzugsfestigkeit [N/mm$^2$] | Biegefestigkeit [N/mm$^2$] | Schraubenausziehwiderstand [N] |
|---|---|---|---|---|
| 7 | 551 | 0,60 | 15,17 | 592 |
| 8 | 606 | 0,69 | 19,35 | 669 |
| 9 | 642 | 0,82 | 22,72 | 670 |
| 10[2] | 579 | 0,35 (3,5 kp/cm$^2$) | 25,8 (258,1 kp/cm$^2$) | --- |
| 11[2] | 669 | 0,35 (3,5 kp/cm$^2$) | 15,0 (149,9 kp/cm$^2$) | --- |

[1] = Vergleichsversuch ohne mikrofibrillierte Cellulose
[2] = Vergleichsversuche aus Holz als Roh- und Werkstoff 1970, 28, 3, Seite 101 bis104 Versuch 10 entspricht Beispiel E, Versuch 11 entspricht Beispiel K.

## Patentansprüche

1. Lignocellulosewerkstoffe, die

   A) 30 bis 98,99 Gew.-% ein- oder mehrere lignocellulosehaltige Stoffe,
   B) 0,01 bis 50 Gew.-% mikrofibrillierte Cellulose,
   C) 1 bis 50 Gew.-% eines Bindemittels, ausgewählt aus der Gruppe bestehend aus Aminoplastharz, Phenolformaldehydharz, organischem Isocyanat mit mindestens zwei Isocyanatgruppen oder deren Gemischen, gegebenenfalls mit einem Härter, und
   D) 0 bis 25 Gew.-% expandierte Kunststoffteilchen mit der Schüttdichte im Bereich von 10 bis 150 kg/m$^3$ und
   E) 0 bis 68 Gew.-% Additive

   enthalten, wobei die lignocellulosehaltigen Stoffe holzfaserhaltige Pflanzen, Holz oder deren Gemische sind.

2. Lignocellulosewerkstoffe nach Anspruch 1, wobei die Gesamtmenge der Trockenmasse der mikrofibrillierten Cellulose, bezogen auf die Trockenmasse der lignocellulosehaltigen Stoffe zwischen 0,05 und 40 Gew.-% beträgt.

3. Lignocellulosewerkstoffe nach einem der Ansprüche 1 oder 2, wobei die mittlere Faserlänge der mikrofibrillierten Cellulose 0,1 bis 1500 μm beträgt.

4. Lignocellulosewerkstoffe nach einem der Ansprüche 1 bis 3, wobei mindestens 15 Gew.-% der Fasern der mikrofibrillierten Cellulose kürzer als 200 μm sind.

5. Lignocellulosewerkstoffe nach einem der Ansprüche 1 bis 4, wobei die BET-Oberfläche der mikrofibrillierten Cellulose 10 bis 500 m$^2$/g beträgt.

6. Lignocellulosewerkstoffe nach einem der Ansprüche 1 bis 5, wobei die mikrofibrillierte Cellulose eine Entwässerungsfähigkeit von ≥60 SR aufweist.

7. Lignocellulosewerkstoffe nach einem der Ansprüche 1 bis 6, wobei die lignocellulosehaltigen Stoffe 20 bis 100 Gew.-% Lignocellulose enthalten.

8. Lignocellulosewerkstoffe nach einem der Ansprüche 1 bis 7, wobei die lignocellulosehaltigen Stoffe aus 20 bis 100 Gew.-% Lignocellulose bestehen.

9. Verfahren zur Herstellung von Lignocellulosewerkstoffen nach einem der Ansprüche 1 bis 8, wobei man

   A) 30 bis 98,99 Gew.-% ein- oder mehrere lignocellulosehaltige Stoffe,
   B) 0,01 bis 50 Gew.-% mikrofibrillierte Cellulose,
   C) 1 bis 50 Gew.-% eines Bindemittels, ausgewählt aus der Gruppe bestehend aus Aminoplastharz, Phenolformaldehydharz, organischem Isocyanat mit mindestens zwei Isocyanatgruppen oder deren Gemischen, gegebenenfalls mit einem Härter,

D) 0 bis 25 Gew.-% expandierte Kunststoffteilchen mit der Schüttdichte im Bereich von 10 bis 150 kg/m$^3$ und

E) 0 bis 68 Gew.-% Additive

mischt und anschließend unter erhöhter Temperatur und unter erhöhtem Druck verpresst,

wobei die lignocellulosehaltigen Stoffe holzfaserhaltige Pflanzen, Holz oder deren Gemische sind.

10. Verfahren zur Herstellung eines mehrschichtigen Lignocellulosewerkstoffes der mindestens drei Schichten enthält, wobei entweder nur die mittlere Schicht oder mindestens ein Teil der mittleren Schichten einen Lignocellulosewerkstoff wie in den Ansprüchen 1 bis 8 definiert enthält oder außer der mittlere Schicht oder mindestens einem Teil der mittleren Schichten mindestens eine weitere Schicht einen Lignocellulosewerkstoff wie in den Ansprüchen 1 bis 8 definiert enthält, wobei man die Komponenten für die einzelnen Schichten übereinanderschichtet und unter erhöhter Temperatur und erhöhtem Druck verpresst.

11. Verfahren gemäß einem der Ansprüche 9 oder 10, wobei keine der äußeren Deckschichten expandierte Kunststoffteilchen B) enthalten.

12. Lignocellulosewerkstoff, erhältlich nach einem Verfahren gemäß einem der Ansprüche 9 bis 11.

13. Mehrschichtiger Lignocellulosewerkstoff, erhältlich nach einem Verfahren gemäß einem der Ansprüche 9 bis 11.

14. Verwendung der Lignocellulosewerkstoffe gemäß einem der Ansprüche 1 bis 8 oder 12 oder eines mehrschichtigen Lignocellulosewerkstoffes gemäß Anspruch 13 zur Herstellung von Gegenständen aller Art und im Baubereich.

15. Verwendung eines lignocellulosehaltigen Stoffes gemäß einem der Ansprüche 1 bis 8 oder 12 oder eines mehrschichtigen Lignocellulosewerkstoffes gemäß Anspruch 13 zur Herstellung von Möbeln und Möbelteilen, von Verpackungsmaterialien, von Laminatfußböden, als Baumaterialien.

**Claims**

1. A lignocellulose material, comprising

   A) 30 to 98.99 wt% of one or more lignocellulosics,
   B) 0.01 to 50 wt% of microfibrillated cellulose,
   C) 1 to 50 wt% of a binder selected from the group consisting of amino resin, phenol-formaldehyde resin, organic isocyanate having two or more isocyanate groups, or mixtures thereof, optionally with a curing agent, and
   D) 0 to 25 wt% of expanded plastics particles having a bulk density in the range from 10 to 150 kg/m$^3$, and
   E) 0 to 68 wt% of additives,

   where the lignocellulosics are woody plants, wood or mixtures thereof.

2. The lignocellulose material according to claim 1, where the microfibrillated cellulose has an overall dry mass in the range of between 0.05 and 40 wt%, based on the dry mass of the lignocellulosics.

3. The lignocellulose material according to either of claims 1 and 2, where the microfibrillated cellulose has a mean fiber length in the range from 0.1 to 1500 µm.

4. The lignocellulose material according to any of claims 1 to 3, where not less than 15 wt% of the fibers of the microfibrillated cellulose are less than 200 µm in length.

5. The lignocellulose material according to any of claims 1 to 4, where the microfibrillated cellulose has a BET surface area in the range from 10 to 500 m$^2$/g.

6. The lignocellulose material according to any of claims 1 to 5, where the microfibrillated cellulose has a dewaterability of $\geq$ 60 SR.

7. The lignocellulose material according to any of claims 1 to 6, where the lignocellulosics comprise from 20 to 100 wt% of lignocellulose.

8. The lignocellulose material according to any of claims 1 to 7, where the lignocellulosics consist of from 20 to 100 wt% of lignocellulose.

9. A method of producing lignocellulose materials according to any of claims 1 to 8, which method comprises

A) 30 to 98.99 wt% of one or more lignocellulosics,
B) 0.01 to 50 wt% of microfibrillated cellulose,
C) 1 to 50 wt% of a binder selected from the group consisting of amino resin, phenol-formaldehyde resin, organic isocyanate having two or more isocyanate groups, or mixtures thereof, optionally with a curing agent,
D) 0 to 25 wt% of expanded plastics particles having a bulk density in the range from 10 to 150 kg/m$^3$, and
E) 0 to 68 wt% of additives

being mixed and subsequently compressed at elevated temperature and at elevated pressure, where the lignocellulosics are woody plants, wood or mixtures thereof.

10. A method of producing a multilayered lignocellulose material comprising at least three layers, where either only the middle layer or at least some of the middle layers comprise a lignocellulose material as defined in claims 1 to 8 or at least one further layer, as well as the middle layer or at least some of the middle layers, comprises a lignocellulose material as defined in claims 1 to 8, which method comprises the components for the individual layers being layered atop each other and compressed at elevated temperature and elevated pressure.

11. The method according to either of claims 9 and 10, where neither outer layer contains expanded plastics particles B).

12. A lignocellulose material obtainable by a method according to any of claims 9 to 11.

13. A multilayered lignocellulose material obtainable by a method according to any of claims 9 to 11.

14. The use of the lignocellulose materials according to any of claims 1 to 8 or 12 or of a multilayered lignocellulose material according to claim 13 in the manufacture of articles of any kind and in the building construction sector.

15. The use of a lignocellulose material according to any of claims 1 to 8 or 12 or of a multilayered lignocellulose material according to claim 13 in the manufacture of furniture and furniture components, of packaging materials and of laminate flooring or as building construction materials.

**Revendications**

1. Matériaux à base de lignocellulose, qui contiennent

A) 30 à 98,99 % en poids d'une ou de plusieurs matières contenant de la lignocellulose,
B) 0,01 à 50 % en poids de cellulose microfibrillée,
C) 1 à 50 % en poids d'un liant, choisi dans le groupe constitué par une résine aminoplaste, une résine phénol-formaldéhyde, un isocyanate organique comportant au moins deux groupes isocyanate ou des mélanges de tels liants, éventuellement avec un durcisseur, et
D) 0 à 25 % en poids de particules de matière plastique expansées présentant une densité apparente dans la plage de 10 à 150 kg/m$^3$ et
E) 0 à 68 % en poids d'additifs

les matières contenant de la lignocellulose étant des plantes contenant des fibres de bois, du bois ou des mélanges de telles matières.

2. Matériaux à base de lignocellulose selon la revendication 1, dans lesquels la quantité totale de la masse sèche de la cellulose microfibrillée, par rapport à la masse sèche des matières contenant de la lignocellulose vaut entre 0,05 et 40 % en poids.

3. Matériaux à base de lignocellulose selon l'une des revendications 1 et 2, dans lesquels la longueur moyenne de fibre de la cellulose microfibrillée vaut de 0,1 à 1 500 µm.

**4.** Matériaux à base de lignocellulose selon l'une des revendications 1 à 3, dans lesquels au moins 15 % en poids des fibres de la cellulose microfibrillée sont plus courtes que 200 $\mu$m.

**5.** Matériaux à base de lignocellulose selon l'une des revendications 1 à 4, dans lesquels la surface BET de la cellulose microfibrillée vaut de 10 à 500 m²/g.

**6.** Matériaux à base de lignocellulose selon l'une des revendications 1 à 5, dans lesquels la cellulose microfibrillée présente une aptitude à la déshydratation de ≥ 60 SR.

**7.** Matériaux à base de lignocellulose selon l'une des revendications 1 à 6, dans lesquels la matière contenant de la lignocellulose contient de 20 à 100 % en poids de lignocellulose.

**8.** Matériaux à base de lignocellulose selon l'une des revendications 1 à 7, dans lesquels la matière contenant de la lignocellulose est constituée de 20 à 100 % en poids de lignocellulose.

**9.** Procédé pour la production de matériaux à base de lignocellulose selon l'une des revendications 1 à 8, dans lequel on mélange

A) 30 à 98,99 % en poids d'une ou plusieurs matières contenant de la lignocellulose,
B) 0,01 à 50 % en poids de cellulose microfibrillée,
C) 1 à 50 % en poids d'un liant, choisi dans le groupe constitué par une résine aminoplaste, une résine phénol-formaldéhyde, un isocyanate organique comportant au moins deux groupes isocyanate ou des mélanges de tels liants, éventuellement avec un durcisseur,
D) 0 à 25 % en poids de particules de matière plastique expansées ayant une densité apparente dans la plage de 10 à 150 kg/m³ et
E) 0 à 68 % en poids d'additifs
et ensuite on presse à température élevée et sous pression élevée,
les matières contenant de la lignocellulose étant des plantes contenant des fibres de bois, du bois ou des mélanges de telles matières.

**10.** Procédé pour la production d'un matériau multicouche à base de lignocellulose, qui contient au moins trois couches, soit seule la couche centrale ou au moins une partie de la couche centrale contient un matériau à base de lignocellulose tel que défini dans les revendications 1 à 8, soit hormis la couche centrale ou au moins une partie de la couche centrale au moins une autre couche contient un matériau à base de lignocellulose tel que défini dans les revendications 1 à 8, dans lequel on dépose les uns sur les autres les composants pour les couches individuelles et on presse à température élevée et sous pression élevée.

**11.** Procédé selon l'une des revendications 9 et 10, dans lequel aucune des couches de recouvrement externes ne contient de particules de matière plastique expansées B) .

**12.** Matériau à base de lignocellulose, pouvant être obtenu conformément à un procédé selon l'une des revendications 9 à 11.

**13.** Matériau multicouche à base de lignocellulose, pouvant être obtenu conformément à un procédé selon l'une des revendications 9 à 11.

**14.** Utilisation des matériaux à base de lignocellulose selon l'une des revendications 1 à 8 ou 12, ou d'un matériau multicouche à base de lignocellulose selon la revendication 13, pour la fabrication d'articles de tout type et dans le secteur du bâtiment.

**15.** Utilisation d'un matériau à base de lignocellulose selon l'une des revendications 1 à 8 ou 12, ou d'un matériau multicouche à base de lignocellulose selon la revendication 13, pour la fabrication de meubles et parties de meubles, de matériaux d'emballage, de sols stratifiés, en tant que matériaux de construction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19947856 A1
- WO 2013092817 A1
- WO 2010131016 A
- WO 2010149711 A
- WO 2011055148 A
- WO 2011051882 A
- EP 51230 A
- EP 402866 A
- US 6379594 B
- EP 726356 A
- US 5112875 A
- WO 0050480 A

**In der Beschreibung aufgeführte Nicht-Patentliteratur**

- **AUS HOLZ ALS ROH.** *Aus Holz als Roh- und Werkstoff,* 1970, vol. 28 (3), 101-104
- **M. DUNKY ; P. NIEMZ.** Holzwerkstoffe und Leime. Springer Verlag, 2002, 91-156
- *Cellulose,* 2010, vol. 17 (459), 460
- *Tappi Journal,* 1962, vol. 45 (1), 38-45
- **AUFLAGE ; HANSER.** *Duroplaste,* 1988, vol. 10, 12-40
- Aminoplaste. Ullmanns Enzyklopädie der technischen Chemie. Verlag Chemie, 1973, vol. 4, 403-424
- Aminoplaste. Ullmann's Encyclopedia of Industrial Chemistry. VCH Verlagsgesellschaft, 1985, vol. A2, 115-141
- Amino Resins. **M. DUNKY ; P. NIEMZ.** Holzwerkstoffe und Leime. Springer, 2002, 251-259, 303-313
- **DIRK GRUNWALD.** Klebstoffe in der Holz- und Möbelindustrie. DRW-Verlag, 268
- Polyurethane. **BECKER/BRAUN.** Kunststoff Handbuch. Hanser, 1993, vol. 7, 17-21, 76-88, 665-671
- Polyurethane. **BECKER/BRAUN.** Kunststoff Handbuch. Hanser, 1993, vol. 7, 18, , 19, , 76
- **MICHAEL SZYCHER.** Szycher's Handbook of Polyurethanes. CRC Press, 1999, 10-1, 10-20
- **M. DUNKY ; P. NIEMZ.** Holzwerkstoffe und Leime. Springer, 2002, 265-269
- **M. DUNKY ; P. NIEMZ.** Holzwerkstoffe und Leime. Springer, 2002, 341-352
- **M. DUNKY ; P. NIEMZ.** Holzwerkstoffe und Leime. Springer, 2002, 385-391
- Polystyrol. B. Ullmann's Encyclopedia. 1996, vol. 4
- Polystyrol. **BEISPIEL.** Kunststoff Handbuch. Hanser, 1996, vol. 4, 640-673
- **M. DUNKY ; P. NIEMZ.** Holzwerkstoffe und Leime. Springer, 2002, 436-444
- **M. DUNKY ; P. NIEMZ.** Holzwerkstoffe und Leime. Springer, 2002, 91-150
- **HOLZ ALS ROH.** *Holz als Roh- und Werkstoff,* 1970, vol. 28 (3), 101-104